# EUROPEAN PATENT APPLICATION

(11) **EP 0 994 131 A1**
(43) Date of publication of application: **19.04.2000**
(21) Application number: 99303855.3
(22) Date of filing: 18.05.1999
(51) Int. Cl.: C08F 136/06, C08F 4/54

(54) **Preparation of neodymium halogen compound suitable to continuous 1, 3-butadiene polymerization**

(30) Priority: 17.10.1998 KR 9841827
(71) Applicant: Korea Kumho Petrochemical Co. Ltd., Seoul 110-110 (KR)
(72) Inventor: Kwag, Gwang Hoon, Yousung-ku Taejeon-city 305-345 (KR); Kim, Dong Hwan, Yousung-ku Taejeon-city 305-345 (KR); Jang, Young Chan, Yousung-ku Taejeon-city 305-345 (KR)
(74) Representative: Nash, David Allan

(57) **Abstract**

Provided with a preparation of neodymium halogen compound suitable to continuous 1,3-butadiene polymerization in the state of colloid having particle size of below 200 nm to prevent formation of precipitation. The preparation includes the steps of dispersing the solution of NdX₃·Y (where Y is an electron donor; and X is F, Cl, Br or I) in a non-polar (or inert) medium and removing the polar reside by azeotropic distillation so as to enhance catalytic activity as a part of Ziegler-Natta catalyst for 1,3-butadiene polymerization.

## Description

### BACKGROUND OF THE INVENTION

### Field of the Invention

The present invention generally relates to a preparation of neodymium halogen compounds suitable to continuous 1,3-butadiene polymerization as a part of Ziegler- Natta catalyst and, more particularly, to a preparation of neodymium halogen compounds which are readily usable in the continuous polymerization for producing high cis 1,4-polybutadiene by dispersing the neodymium halogen compounds in the state of colloid having the particle size of below 200 nm to increase the number of active sites per unit weight, and inhibiting formation of precipitation.

### Background of the Related Art

Examples of rare earth halides used as a catalyst for diene (1,3-butadiene or isoprene) polymerization include compounds having a formula given by LnX₃·Y, where Ln is a rare earth metal; X is Cl, Br or I; and Y is tetrahydrofuran, isopropyl alcohol, ethyl alcohol or alkylphosphine. Especially, neodymium halides include NdCl₃, NdCl₃·xTHF (where x is an integer ranging from 1 to 6; and THF is tetrahydrofuran) or NdCl₃·yTBP (where y is an integer ranging from 1 to 6; and TBP is tributylphosphine) (References: Jihua Y., Jingyu H., Shufen F., Enli P., Demin X., Chongqi Z., Jun O., "A highly active lanthanide chloride catalyst for stereospecific polymerization of conjugated diene". Sci. Sinica 23, 73 (1980); Yang J. H., Tsutsui M., Chen Z., Bergbreiter D.E., "New Binary Lanthanide Catalysts for Stereospecific Diene Polymerization", Macromolecules 15, 230 (1982); Monakov Y. B., Marina N. G., Sabirov Z. M., "The Influence of the Structure of the Organoaluminum Component on the Polymerization of Dienes in the Presence of Lanthanide-Containing Catalytic Systems", Polym. Sci., 36, 309 (1994); Iovu H., Hubca G., Simonescu E., Badea E., Hurst J., "Butadiene Polymerization using Binary Neodymium-based Catalyst Systems. The Effect of Catalyst Preparation", Eur. Polym. J., 33, 811(1997)).

A preparation of neodymium halogen compounds to be used as a catalyst for 1,3-butadiene polymerization involves contacting a polar solvent such as tetrahydrofuran. ethyl alcohol or isopropyl alcohol used as a solvent and complex compound with neodymium halides to produce a precipitation and removing the solvent in vacuum to produce a neodymium halogen compound (See. Shen Z., Inorg Chim. Acta, 140, 7 (1987)). Thus the obtained powder reacts with alkyl aluminum in a non-polar medium to have activity as a catalyst and is used for 1,3-butadiene polymerization to produce high cis 1,4-polybutadiene.

Neodymium halogen compounds, however, are to be used in the form of powder in a polymerization because of their low solubility in a non-polar solvent. Furthermore, they cannot be used in the continuous 1,3-butadiene polymerization because of not only their poor solubility making the catalyst feed line plugging but also their low reactivity.

### SUMMARY OF THE INVENTION

Accordingly, it is an object of the present invention to provide a preparation of neodymium halogen compounds which is usable in the continuous process of high cis 1,4-polybutadiene and increases the active area of catalyst per unit weight.
Additional features and advantages of the invention will be set forth in the description which follows, and in part will be apparent from the description, or may be learned by practice of the invention. The objectives and other advantages of the invention will be realized and attained by the structure particularly pointed out in the written description and claims hereof.

To achieve these and other advantages and in accordance with the purpose of the present invention, as embodied and broadly described, a preparation of neodymium halogen compound suitable to continuous 1,3-butadiene polymerization, which is to prepare neodymium halogen compound used as a part of catalyst for the polymerization, in the state of colloid having particle size in the unit of nanometer includes the steps of: slowly adding a solution of neodymium halogen compound expressed by NdX₃·Y (where Y is an electron donor; and X is F, Cl, Br or I) to a non-polar medium under vigrous stirring : and removing the polar solvent by azeotropic distillation.

It is to be understood that both the foregoing general description and the following detailed description are exemplary and explanatory and are intended to provide further explanation of the invention as claimed.

### DETAILED DESCRIPTION OF PREFERRED EMBODIMENT

Reference will now be made in detail to the preferred embodiments of the present invention.

The present invention is directed to a preparation of neodymium halogen compounds out of rare earth compounds that are used as part of a catalyst for 1,3-butadiene polymerization. The neodymium halogen compounds are prepared particularly to be suitable to continuous process by dispersing neodymium trichloride in cyclohexane in the state of colloid having nanometer particle size and using neodymium trichloride in the colloid state as part of a catalyst for 1,3-butadiene polymerization.

The construction of neodymium halogen compound is as follows in the present invention.

Neodymium halides can be obtained in the well-known preparation of inorganic compounds. For example, hydrated neodymium trichloride is obtained from neodymium oxide(Nd₂O₃) in contact with hydrochloric acid and neodymium tribromide is obtained by treating neodymium oxide with bromic acid. Another usable halogens are fluorine and iodine.

Neodymium halogen compounds have a structure of NdX₃·Y (where Y is an electron donor such as tetrahydrofuran or isopropyl alcohol; and X is F, Cl, Br or I). Ligand Y has an effect on the activity of neodymium halogen compound in the 1,3-butadiene polymerization and may be at least one selected from ethers and alcohols. Ligand Y is preferably a compound having a boiling point below 100 °C. Examples of ethers used herein include dimethyl ether, diethyl ether, tetrahydrofuran and the like. Examples of ketones used herein are acetone, methyl ethyl ketone and the like. and examples of alcohols include methanol, ethanol and isopropyl alcohol that have 1 to 6 carbon atoms.

To prepare such neodymium halogen compounds in the form suitable to the continuous 1,3-butadiene polymerization in the present invention, neodymium halogen compounds are dispersed in a non-polar medium(or inert medium) in the state of colloid having a nanometer particle size. Examples of compounds used as a non-polar medium herein include aliphatic hydrocarbons (e.g., butane, pentane, hexane, isopentane, heptane, octane and isoctane). cycloaliphatic hydrocarbons (e.g., cyclopentane, methyl cyclopentane, cyclohexane, methyl cyclohexane and ethyl cyclohexane), mineral spirit and aromatic hydrocarbons (benzene, toluene, ethyl benzene and xylene). These media must be anhydrous and deoxygenated before use in the 1,3-butadiene polymerization. Especially, water in the solvents is excellent in coordination with neodymium halide compounds for hydration.

The amount of non-polar medium to be used in the present invention is preferably the double of the volume of the neodymium halide compound solution.

Metal carboxylates, which are soluble in a non-polar medium, can be used as stabilizer in order to keep the colloidal state of neodymium halide compound in a long storage period. Examples of metal carboxylates include neodymium versatate, neodymium naphthenate, neodymium octoate, cobalt octoate, cobalt naphthenate, tin octoate and the like. The metal includes lanthanide, actinide and transition metals, and the carboxylate has 8 to 20 carbon atoms.

The catalyst is prepared under nitrogen atmosphere in order to prevent the contact with oxygen and water as possible.

Thus sky blue-colored neodymium halide solution is introduced gradually into a the non-polar medium under nitrogen atmosphere, while vigorously stirring the mixture, to produce a milky white colloidal neodymium halogen compound. The concentration of the colloid is preferably 0.01% to 10% Nd by weight for purpose of use in the 1,3-butadiene polymerization.

It is necessary to remove a residual polar solvent in the non-polar medium because a slight amount of it affects the activity of catalyst adversely. Removal of the polar solvent can be achieved by azeotropic distillation.

One thing that should be noted is to maintain the initial amount of the non-polar medium by successively adding the non-polar medium during azeotropic distillation. The residue of polar solvent can be measured by means of gas chromatography.

Thus the prepared colloidal neodymium halogen has a particle size of below 200 nm.

The preparation of high cis 1,4-polybutadiene in the present invention includes contacting the colloidal neodymium halogen dispersed on the non-polar medium with organo aluminum to have the activity as a catalyst and using the active neodymium catalyst in the polymerization of 1,3-butadiene in the presence of a non-polar medium to obtain high cis 1,4- polybutadiene.

Organoaluminum used herein is alkyl aluminum expressed by formula I or aluminoxane having formula II. 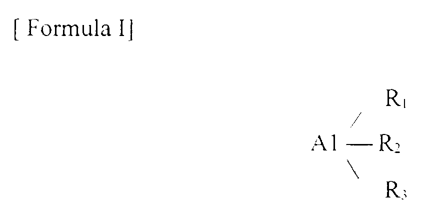 where R₁, R₂ and R₃ are an alkyl, cycloalkyl, aryl, arylalkyl or alkoxy group having 1 to 10 carbon atoms, or a hydrogen atom. 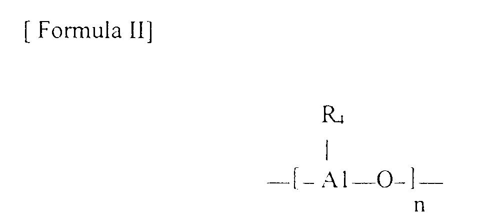 where R₄ is a methyl group, and n is an integer between 10 and 30.

Examples of alkyl aluminum compounds expressed by formula I include trimethyl aluminum, triethyl aluminum, tripropyl aluminum, tributyl aluminum, tri-isobutyl aluminum, trihexyl aluminum and di-isobutyl aluminum hydrides.

As well as alkyl aluminum compounds, oligomeric aluminoxanes are also used in the present invention and may be expressed by formula II.

The methylaluminoxane compounds to be used herein may be partly substituted with ethyl, propyl or isobutyl group.

The mole ratio of alkyl aluminum to neodymium halogen compound is preferably 20:1 to 200:1.

As neodymium halogen compound is dispersed in the state of colloid having a particle size of below 200 nm in a non-polar medium, precipitation is suppressed and a high surface area of neodymium halide is obtained. Thus neodymium halogen compound becomes more ready to be used in the continuous process of high cis 1,4-polybutadiene.

The present invention will be described below in detail with reference to the preferred embodiments, which are not to limit the present invention.

### [Embodiment 1]

Anhydrous NdCl₃ (1.04 g) and tetrahydrofuran (105.9 g) were placed in a 300 mL beaker under in the nitrogen atmosphere and stirred at room temperature for 24 h to form a blue solution.

This solution (14 mL) was taken with a syringe and gradually added to cyclohexane (300 mL). The mixture was vigorously stirred for 4 h and then heated slowly to remove tetrahydrofuran by azeotropic distillation with a Dean-Stark apparatus. Thus a colloid suspension existing in cyclohexane was obtained. At this time cyclohexane was continuously added as much as the distilled amount in order to maintain the initial amount of cyclohexane. The residual polar solution was measured by means of gas chromatography.

In order to form active catalyst for 1,3-butadiene polymerization. 2.8 x 10⁻⁵ mol of colloidal NdCl₃·xTHF (x is an integer between 1 and 6) and 8.4 ; x 10⁻⁴ mol of tri-isobutyl aluminum were sequentially added to a sealed 100 mL round flask filled with nitrogen so that the active neodymium catalyst was obtained in 1 h at 20 °C.

### [Embodiment 2]

The same procedures as Embodiment 1 were performed to obtain colloidal neodymium halogen compound with an exception that 100 mL of cyclohexane was used.

### [Comparative Example 1]

Anhydrous NdCl₃ (3.84 g) was dissolved in tetrahydrofuran (90.00 g) under nitrogen atmosphere. After filtration, the solution was added in n-hexane (30 g) at room temperature, and placed at 0 °C for 24 h. The formed precipitation was filtered, washed with n-hexane (20 g), and dried in vacuum.

### [Experimental Example 1]

The particle size of neodymium halide compounds prepared in the Embodiments 1 and 2 and the Comparative Example 1 were measured by using a laser light scattering method with model 127 of Molvern company. The results are listed in Table 1.

The activated neodymium catalysts in the Embodiments 1 and 2 and the Comparative Example 1 were used for 1,3-butadiene polymerization in the presence of 1,3-butadiene (10 g) and cyclohexane (50 g). These polymerizations were carried out in a 100 mL pressure glass reactor filled with nitrogen at 40 °C for 2 h. After polymerization, 2.6-di-t-butylparacresol (0.1 g) was added and the polymer was quenched in ethanol (100 mL). The conversion data are listed in Table 1.

**[Table 1]**

| | Particle Diameter of Catalyst (nm) | Yield of Polymer (%) |
|---|---|---|
| Embodiment 1 | 92 | 76 |
| Embodiment 2 | 197 | 60 |
| Comparative Example 1 | 1720 | 5 |

Table 1 shows that neodymium halogen compound of the present invention (Examples 1 and 2) is obtained in the state of colloid having particle size in the unit of nanometers and can be used in the continuous 1,3-butadiene solution polymerization and in the gas polymerization to produce high cis 1,4-polybutadiene with a high yield. On the other hand, neodymium halogen compound prepared by the related art method (Comparative Example 1) has a large particular size with a consequence of very low activity of catalyst.

Such as in the present invention described above, neodymium halogen compound is obtained in the colloidal form having particular size in the unit of nanometers in a non-polar medium to enhance the activity and can be used as a high efficiency catalyst for 1,3-butadiene solution polymerization or gas polymerization in preparation of high cis1,4-polybutadiene.

It will be apparent to those skilled in the art that various modifications and variations can be made in the present invention without departing from the spirit or scope of the invention. Thus, it is intended that the present invention cover the modifications and variations of this invention provided they come within the scope of the appended claims and their equivalents.

## Claims

1. A preparation of neodymium halogen compound in the state colloid having particle size in the unit of nanometers suitable to continuous 1,3-butadiene polymerization, which is to prepare neodymium halogen compound used as a part of catalyst for the polymerization, the preparation comprising the steps of:
slowly adding a solution of neodymium halogen compound expressed by NdX₃·Y (where Y is an electron donor; and X is F, Cl, Br or I) to a non-polar medium and/or stabilizers under stirring ; and
removing a polar solvent by azeotropic distillation.

2. The preparation as claimed in claim 1, wherein the neodymium halogen compound contains Cl as halogen atom for continuous 1,3-butadiene polymerization.

3. The preparation as claimed in claim 1, wherein the non-polar medium is selected from the group consisting of butane, pentane, hexane, isopentane, heptane, octane, isoctane, cyclopentane, methyl cyclopentane, cyclohexane, methyl cyclohexane, ethyl cyclohexane, benzene, toluene, ethyl benzene xylene and mineral spirit.

4. The preparation as claimed in claim 1, wherein the non-polar medium is to be anhydrous and deoxygenated.

5. The preparation as claimed in claim 1, wherein the organic chelate compound has the boiling point of below 100 °C and is selected from the group consisting of dimethyl ether, diethyl ether, tetrahydrofuran, methanol, ethanol and isopropyl alcohol.

6. The preparation as claimed in claim 1, wherein the concentration of colloid is 0.01 to 10% Nd (wt/wt) to the non-polar medium.

7. The preparation as claimed in claim 1, wherein the stabilizers, in order to keep the colloidal state of neodymium halide compound in a long storage time, are metal carboxylates soluble in the non-polar medium.

8. The preparation as claimed in claim 7, wherein the metal carboxylates include neodymium versatate, neodymium naphthenate, neodymium octoate, cobalt octoate, cobalt naphthenate, tin octoate and the like.

9. The preparation as claimed in claim 7, wherein the carboxylate has 8 to 20 carbon atoms.

10. The preparation as claimed in claim 7, wherein the metal includes lanthanide, actinide and transition metals.
